# EUROPÄISCHE PATENTANMELDUNG

(11) **EP 3 708 733 A1**
(43) Veröffentlichungstag der Anmeldung: **16.09.2020**
(21) Anmeldenummer: 20158569.2
(22) Anmeldetag: 20.02.2020
(51) Int. Cl.: E04F 11/02, G05B 15/02, H04Q 9/00, F21V 33/00

(54) **TREPPENSYSTEMVORRICHTUNG**

(30) Priorität: 12.03.2019 DE 202019001159 U
(71) Anmelder: Blue Star GmbH, 74076 Heilbronn (DE)
(72) Erfinder:
(74) Vertreter: Clemens, Gerhard

(57) **Zusammenfassung**

Eine Treppensystemvorrichtung (10) mit einer Treppeneinrichtung (11) mit mehreren Treppenstufen (12) und einem Geländer (13), gekennzeichnet dadurch, dass eine Sensoreinrichtung (14) mit zumindest einer Sensoreinheit (16) vorhanden ist zur Erfassung aktueller physikalischer und/ oder chemischer Messdaten in/ an der Treppeneinrichtung (11) oder deren Umgebung, wobei die Sensoreinrichtung (14) über eine elektronische Kommunikationsverbindungseinrichtung (18) mit zumindest einem elektronischen Gerät (20) oder zumindest einer elektronischen Steuereinrichtung (30) drahtlos in Verbindung steht, das elektronische Gerät (20)/ die elektronische Steuereinrichtung (30) zumindest eine Auswerteinheit (24) und/ oder Speichereinheit (26) und/oder Anzeigeeinheit (28) aufweist, die die von der Sensoreinrichtung empfangenen Signale auswertet/ en, das elektronische Gerät (20)/ die elektronische Steuereinrichtung (30) so ausgebildet ist, dass in Abhängigkeit der Auswertung der empfangenen Signale diese angezeigt, gespeichert und/oder weiterverwendet werden und/oder weitere Anlagen, Steuereinrichtungen oder elektronische Geräte in drahtloser Kommunikationsverbindung angesteuert werden können, um beispielsweise voreingestellte Nutzervorgaben umzusetzen oder Prozesse in die Wege zu leiten und/ oder Informationen auszuwerten und/ oder anzuzeigen und/ oder weiterzuleiten.

## Beschreibung

### TECHNISCHES GEBIET

Die vorliegende Erfindung betrifft eine Treppensystemvorrichtung mit einer Treppeneinrichtung mit mehreren Treppenstufen und einem Geländer.

### STAND DER TECHNIK

Aus der DE 20 2011 106 195 U1 ist eine Treppe mit Treppenstufen unter einer Beleuchtungseinrichtung bekannt, bei der die Beleuchtungseinrichtung beim Betreten der Treppe durch eine Person aufgrund von vorhandenen Sensoren aktiviert wird.

### DARSTELLUNG DER ERFINDUNG

Der vorliegenden Erfindung liegt die Aufgabe beziehungsweise das technische Problem zugrunde, eine Treppensystemvorrichtung mit einer Treppeneinrichtung mit mehreren Treppenstufen und einem Geländer anzugeben, die es ermöglicht, unterschiedlichste Informationen, die für die Treppeneinrichtung relevant sind, zu erfassen und auszuwerten und die es ermöglicht in ein digitales Haus-/ Raummanagement eingebunden zu werden.

Die erfindungsgemäße Treppensystemvorrichtung zeichnet sich durch die Merkmale des unabhängigen Anspruchs 1 aus. Vorteilhafte Ausgestaltungen und Weiterbildungen sind Gegenstand der vor dem unabhängigen Anspruch 1 direkt oder indirekt abhängigen Ansprüchen.

Die erfindungsgemäße Treppensystemvorrichtung zeichnet sich demgemäß dadurch aus, dass eine Sensoreinrichtung mit zumindest einer Sensoreinheit vorhanden ist zur Erfassung aktueller physikalischer und/ oder chemischer Messdaten in/ an der Treppeneinrichtung oder deren Umgebung, wobei die Sensoreinrichtung über eine elektronische Kommunikationsverbindungseinrichtung mit zumindest einem elektronischen Gerät oder zumindest einer elektronischen Steuereinrichtung drahtlos in Verbindung steht, das elektronische Gerät/ die elektronische Steuereinrichtung zumindest eine Auswerteinheit und/ oder Speichereinheit und/ oder Anzeigeeinheit aufweist, die die von der Sensoreinrichtung empfangenen Signale auswertet/ en, das elektronische Gerät / die elektronische Steuereinrichtung so ausgebildet ist, dass in Abhängigkeit der Auswertung der empfangenen Signale diese angezeigt, gespeichert und/ oder weiterverwendet werden und/ oder weitere Anlagen, Steuereinrichtungen oder elektronische Geräte in drahtloser Kommunikationsverbindung angesteuert werden können, um beispielsweise voreingestellte Nutzervorgaben umzusetzen oder Prozesse in die Wege zu leiten und/ oder Informationen auszuwerten und/ oder anzuzeigen und/ oder weiterzuleiten.

Durch die Ausstattung der Treppeneinrichtung mit der Sensoreinrichtung mit Sensoreinheiten können unterschiedlichste physikalische und chemische Messdaten beziehungsweise Informationen erfasst und digital ausgewertet werden, wobei die ausgewerteten Daten auf unterschiedlichste Weise in vielfältiger Art genutzt werden können.

Eine besonders bevorzugte Ausgestaltung der erfindungsgemäßen Treppensystemvorrichtung zeichnet sich dadurch aus, dass die elektronische Kommunikationsverbindungseinrichtung eine WLAN-, Bluetooth- oder anders geartete drahtlose Kommunikationsverbindung aufweist.

Bevorzugt weist die Sensoreinrichtung einen RFID-Chip auf. Es kann auch eine elektronische Baueinheit mit vergleichbarer Technologie verwendet werden.

Die Sensoreinrichtung wird bevorzugt bei neuen Treppen werkseitig verbaut. Eine Nachrüstung von Bestandstreppen ist gemäß einer alternativen Ausgestaltung ebenfalls möglich, indem die Sensoreinrichtung/ die Sensoreinheiten als an der Treppeneinrichtung und/ oder dem Geländer und/ oder an einer oder mehreren Treppenstufen nachrüstbar ausgebildet sind.

Eine in der Praxis besonders bewährte Ausgestaltung zeichnet sich dadurch aus, dass das elektronische Gerät als Smartphone oder Tablet oder Computer ausgebildet ist mit einer Sende- und Empfangseinheit, einer Auswerteinheit, einer Speichereinheit und/ oder einer Anzeigeeinheit.

Eine vorteilhafte Ausgestaltung zeichnet sich dadurch aus, dass die Sensoreinheit als Bewegungs-, Beschleunigungs-, Druck- oder Vibrationssensoreinheit zur Erfassung der Begehung der Treppeneinrichtung durch eine Person, wobei Sensoreinheiten bevorzugt an der untersten und/ oder obersten Treppenstufe oder an jeder Treppenstufe angeordnet sein können.

Eine besonders bevorzugte vorteilhafte Ausgestaltung zeichnet sich dadurch aus, dass die Auswerteinheit so ausgebildet ist, dass sie in Abhängigkeit der Signale der Sensoreinrichtung die Anzahl der Treppenbegehungen und/ oder den Zeitpunkt der Treppenbegehungen ermittelt und abrufbar in der Speichereinheit zur weiteren Auswertung abspeichert. Dadurch kann die Nutzung der Treppe über eine Fitnesssoftware beispielsweise in Bezug auf begangene Etage pro Tag oder den Kalorienverbrauch, ausgewertet werden. Auch kann über die Erfassung der Treppennutzung beispielsweise ein automatisches Serviceangebot erstellt werden, in dem der Nutzer darauf hingewiesen wird, dass nach Überschreitung einer vorgegebenen Anzahl von Begehungen eine Wartung oder ein Sicherheitscheck erforderlich sein könnte. Das Vorhandensein der genannten Sensoren bietet auch die Möglichkeit, die Treppe in eine Alarmanlage einzubinden, so dass bei unbefugter Begehung der Treppe ein Alarm ausgelöst wird oder eine Mitteilung von dem elektronischen Gerät ausgegeben oder versendet wird. Durch die Speicherung des Zeitpunkts der Treppenbegehung ist eine weitere Kontrollmöglichkeit problemlos gegeben.

Auch unter Sicherheitsaspekten kann die erfindungsgemäße Treppensystemvorrichtung angewandt werden. So kommt es bei älteren alleinlebenden Menschen zu Notsituationen, aufgrund eines Sturzes oder gesundheitlichen Problemen, ohne dass eine rechtzeitige ärztliche Versorgung möglich ist. Erfindungsgemäß kann die Treppensystemvorrichtung über die Sensoren so ausgestaltet werden, dass im Falle eines Treppensturzes oder einer Nichtnutzung über eine vorgegebene Anzahl von Stunden oder Tagen eine elektronische Mitteilung auf einem elektronischen Gerät angezeigt oder eine elektronische Mitteilung an ein elektronisches drittes Gerät verschickt wird.

Eine die Sicherheit ebenfalls erhöhende vorteilhafte Weiterbildung der erfindungsgemäßen Treppensystemvorrichtung zeichnet sich dadurch aus, dass eine Lichtsensoreinheit zum Erfassen der aktuellen Helligkeit/Dunkelheit vorhanden ist, die an jeder Treppenstufe vorhandene Sensoreinheit so ausgebildet ist, dass bei Begehung einer Treppenstufe und bei Unterschreiten eines vorgegebenen Lichtwerts entsprechende Signale an eine Steuereinrichtung einer Lichtanlage mit Lichteinheiten an jeder Treppenstufe abgibt, die daraufhin eine vorgegebene Anzahl von Lichteinheiten, die ober- und/ oder unterhalb der betretenden Stufe angeordnet sind, über einen vorgegebenen Zeitraum aktiviert und/ oder einen vorgegebenen Beleuchtungswert/Beleuchtungsfarbe der Lichteinheiten aktiviert.

Eine besonders bevorzugte Ausgestaltung zeichnet sich dadurch aus, dass die Auswerteinheit so ausgebildet ist, dass sie bei Feststellung erhöhter Beschleunigungs- oder Vibrationswerte eine Alarmanlage angesteuert wird und/ oder eine Information in der Anzeigeeinheit angezeigt wird und/ oder eine elektronische Mitteilung an dritte elektronische Geräte versandt wird. Dadurch ist es möglich, dass eine beim Begehen auf der Treppe gestürzte Person zeitnah versorgt werden kann, da Dritte beispielsweise Angehörige oder medizinisches Personal entsprechend informiert werden.

Eine Versorgung durch Angehörige oder medizinisches Fachpersonal ist auch für den Fall gewährleistet, in dem allein stehende Personen gesundheitliche Probleme haben und sich nicht bewegen können. In dieser Hinsicht zeichnet sich eine besonders vorteilhafte Ausgestaltung dadurch aus, dass die Auswerteinheit so ausgebildet ist, dass bei Feststellung der Überschreitung eines vorgegebenen Zeitintervalls ohne Bewegungssignale eine Alarmanlage angesteuert und/ oder eine Information in der Anzeigeeinheit angezeigt wird und/ oder eine elektronische Mitteilung an dritte elektronische Geräte versandt wird.

Eine vorteilhafte Ausgestaltung und Weiterbildung, die die Energieeffizienz eines Hauses günstig beeinflusst, zeichnet sich dadurch aus, dass die Sensoreinrichtung so ausgebildet ist, dass sie Klimadaten des Raumklimas in den die Treppeneinrichtung angeordnet ist, wie Temperatur, Luftfeuchtigkeit oder dergleichen detektiert und an eine Steuerungseinrichtung einer Heizungs-/ Klimaanlage zur funktionsgerechten Steuerung des Raumklimas übermittelt.

Um Gefahrensituationen rechtzeitig erkennen zu können, zeichnet sich eine vorteilhafte Weiterbildung dadurch aus, dass die Sensoreinrichtung Rauch- und/ oder Gassensoreinheiten aufweist, und die Auswerteinheit so ausgebildet ist, dass sie bei Überschreitung vorgegebener Grenzwerte eine Alarmanlage ansteuert und/ oder eine Information in der Anzeigeeinheit angezeigt wird und/ oder eine elektronische Mitteilung an dritte elektronische Geräte versendet.

Die Energieversorgung der Sensoreinrichtung beziehungsweise der Sensoreinheiten kann vorteilhaft über ein Stromnetz, Akkus, Solarzellen, Induktionsaufladung oder durch die Signale der Sende- und Empfangseinheit des elektronischen Geräts (RFID-Technik) oder dergleichen möglich sein. Auch ist es möglich, dass elektronische Sensoren eingesetzt werden, deren Energieversorgung durch schaltweise Betätigung oder durch die beim Betätigen eingebrachte Energie gewährleistet wird.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

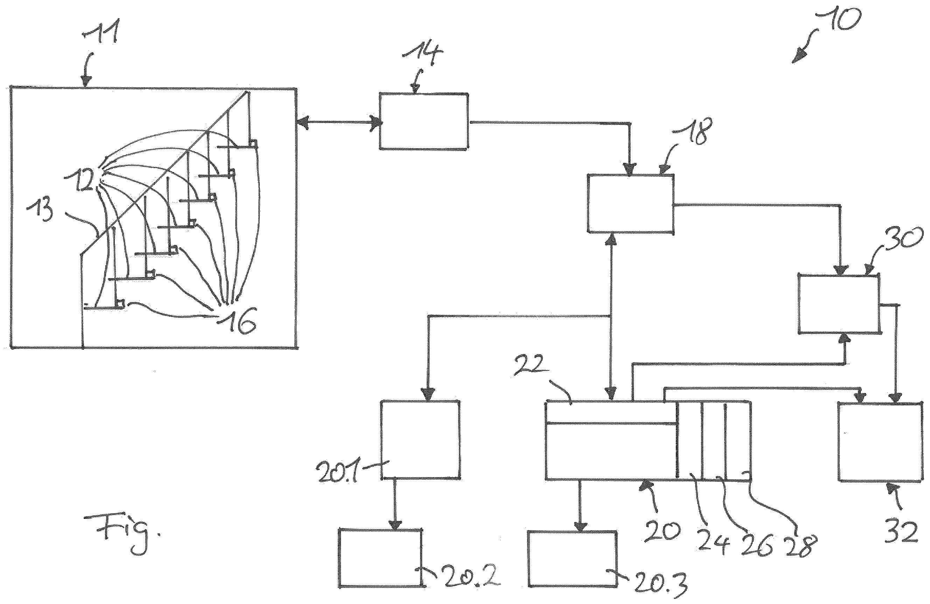

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden.

Die Figur zeigt stark schematisiert eine Treppensystemvorrichtung mit einer Treppeneinrichtung mit Treppenstufen an der eine Sensoreinrichtung mit Sensoreinheiten vorhanden ist, die über eine drahtlose Kommunikationsverbindung mit einem elektronischen Gerät und/ oder elektronischen Steuereinrichtung in Kommunikationsverbindung steht.

### WEGE ZUM AUSFÜHREN DER ERFINDUNG

Die Figur zeigt stark schematisiert eine Treppensystemvorrichtung 10, die eine Treppeneinrichtung 11 mit mehreren Treppenstufen 12 aufweist. An die Treppeneinrichtung 11 ist eine Sensoreinrichtung 14 angeschlossen, die Sensoreinheiten 16 aufweist, die im dargestellten Ausführungsbeispiel an jeder Treppenstufe 12 vorhanden sind. Die Sensoreinheiten 16 können in beliebiger Anzahl vorhanden sein.

Die Sensoreinheiten 16 können auch an einem Geländer 13 angeordnet sein.

Die Sensoreinrichtung 14 kommuniziert über eine elektronische drahtlose Kommunikationsverbindungseinrichtung 18 mit einem elektronischem Gerät 20, wobei das elektronische Gerät 20 im dargestellten Ausführungsbeispiel eine Sende- und Empfangseinheit 22, eine Auswerteinheit 24, eine Speichereinheit 26 und eine Anzeigeeinheit 28 aufweist.

Es ist auch möglich, dass die Sensoreinrichtung 14 über die Kommunikationsverbindungseinrichtung 18 mit einem weiteren elektronischen Gerät 20.1 oder einer Vielzahl von weiteren elektronischen Geräten 20.2, 20.3 kommuniziert.

Das elektronische Gerät 20 kann weiterhin mit einer Anlageeinrichtung 32 in Kommunikationsverbindung stehen, wobei diese Anlageeinrichtung 32 beispielsweise als Heizungs-/ Klimaanlage, Beleuchtungsanlage, Alarmanlage oder dergleichen Anlage, die vorteilhaft für ein Management einer Immobilien eingesetzt wird, ausgebildet sein kann.

Gleichzeitig kann das elektronische Gerät 20 mit einer elektronischen Steuereinrichtung 30 kommunizieren, die wiederum mit der Anlageeinheit 32 kommuniziert. Es ist auch möglich, dass die Sensoreinrichtung 14 über die Kommunikationsverbindungseinrichtung 18 mit der elektronischen Steuereinrichtung 30 direkt korrespondiert.

Mit der dargestellten Treppensystemvorrichtung 10 ist es problemlos möglich, unterschiedlichste Informationen beziehungsweise physikalische oder chemische Messdaten treppenspezifisch im Bereich der Treppeneinrichtung 11 zu erfassen, je nachdem welche Art von Sensoreinheiten 16 verwendet werden. So können beispielsweise Messdaten der Temperatur, Lichtverhältnisse, Luftfeuchtigkeit, von Bewegungen, der Nutzung problemlos in das digitale Management einer Immobilie eingebunden werden, die entsprechend ausgewertet werden können, um beispielsweise Informationen abzuspeichern, anzuzeigen oder Prozesse einzuleiten. Die von den Sensoreinheiten 16 gesammelten Daten können auf unterschiedlichste Weise genutzt werden. Die Verbindung der Sensoreinrichtung 14 mit dem elektronischen Gerät 20 oder der elektronischen Steuereinrichtung 30 über die elektronische drahtlose Kommunikationsverbindungseinrichtung 18 erfolgt beispielsweise über WLAN-/Bluetooth- oder eine alternative drahtlose Verbindungstechnologie.

Bevorzugt sind diese Sensoreinheiten 16 werkseitig verbaut. Eine Nachrüstung von Bestandstreppen ist ebenso problemlos möglich.

Durch die erfindungsgemäße Treppensystemvorrichtung 10 ergibt sich eine sehr große Vielfalt von Anwendungsbeispielen. Mittels der verbauten Sensoreinrichtung 14 mit Sensoreinheiten 16 kann die Treppe individuell und dynamisch beleuchtet werden, zum Beispiel immer die drei Treppenstufen 12 vor und nach der Person, die die Treppe begeht. Bezüglich des Ambientes der Beleuchtung können unterschiedliche Farben oder Beleuchtungsstärken fallweise ausgewählt werden. Die generierten Daten können auch für die Steuerung des Klimas genutzt werden. Die verbauten Sensoreinheiten 16 sind zum Beispiel in der ersten und letzten Stufe eines Stockwerks beziehungsweise im Geländer vorhanden und erfassen die Differenzen des Raumklimas, die für die Klimatisierungssteuerung der Klimaanlage beziehungsweise der Heizungsanlage genutzt werden können.

Die Nutzung der Treppe kann ebenso über eine Fitnesssoftware (Etage pro Tag, Kalorienverbrauch) ausgewertet werden. Über die Erfassung der Treppennutzung über längere Zeiträume kann automatisches Serviceangebot erstellt werden nach Überschreiten einer maximal vorgegebenen Begehungsanzahl, indem ein Hinweis auf eine Treppenwartung oder -check auf dem elektronischen Gerät angezeigt wird. Auch kann die Treppeneinrichtung problemlos innerhalb einer Alarmanlage integriert sein, das heißt dass bei unbefugter Begehung der Treppe ein Alarm ausgelöst wird. Auch kann über das elektronische Gerät eine Information über den Begehungszeitpunkt angezeigt werden.

Auch der Fall eines Treppensturzes oder Nichtnutzung der Treppeneinrichtung über eine vorgegebene Anzahl von Stunden oder Tagen kann problemlos festgestellt werden, was beispielsweise bei alleinlebenden Personen von hoher Relevanz sein kann. Falls über die Sensoreinrichtung ein Treppensturz oder eine längere Nichtnutzung detektiert wird, kann beispielsweise über WLAN-/ Gateway-Indikation eine elektronische Nachricht an Angehörige oder medizinisches Personal gesandt und entsprechend informiert werden.

## Patentansprüche

1. Treppensystemvorrichtung (10) mit einer Treppeneinrichtung (11) mit mehreren Treppenstufen (12) und einem Geländer (13),
- **dadurch gekennzeichnet, dass**
- eine Sensoreinrichtung (14) mit zumindest einer Sensoreinheit (16) vorhanden ist zur Erfassung aktueller physikalischer und/ oder chemischer Messdaten in/ an der Treppeneinrichtung (11) oder deren Umgebung, wobei
- die Sensoreinrichtung (14) über eine elektronische Kommunikationsverbindungseinrichtung (18) mit zumindest einem elektronischen Gerät (20) oder zumindest einer elektronischen Steuereinrichtung (30) drahtlos in Verbindung steht,
- das elektronische Gerät (20) / die elektronische Steuereinrichtung (30) zumindest eine Auswerteinheit (24) und/ oder Speichereinheit (26) und/ oder Anzeigeeinheit (28) aufweist, die die von der Sensoreinrichtung empfangenen Signale auswertet/ en,
- das elektronische Gerät (20) / die elektronische Steuereinrichtung (30) so ausgebildet ist, dass in Abhängigkeit der Auswertung der empfangenen Signale diese angezeigt, gespeichert und/ oder weiterverwendet werden und/ oder weitere Anlagen, Steuereinrichtungen oder elektronische Geräte in drahtloser Kommunikationsverbindung angesteuert werden können, um beispielsweise voreingestellte Nutzervorgaben umzusetzen oder Prozesse in die Wege zu leiten und/ oder Informationen auszuwerten und/ oder anzuzeigen und/ oder weiterzuleiten.

2. Treppensystemvorrichtung nach Anspruch 1,
- **dadurch gekennzeichnet, dass**
- die elektronische Kommunikationsverbindungseinrichtung (18) eine WLAN-, Bluetooth- oder andersgeartete drahtlose Kommunikationsverbindung aufweist.

3. Treppensystemvorrichtung nach Anspruch 1 und oder 2,
- **dadurch gekennzeichnet, dass**
- die Sensoreinrichtung einen RFID-Chip oder eine vergleichbare Technologie aufweist.

4. Treppensystemvorrichtung nach einem oder mehreren der vorstehenden Ansprüche,
- **dadurch gekennzeichnet, dass**
- die Sensoreinrichtung (14)/ die Sensoreinheit/ en (16) integriert in der Treppeneinrichtung (11) und/ oder dem Geländer (13) und/ oder in einer oder mehreren Treppenstufen (12) angeordnet ist/ sind.

5. Treppensystemvorrichtung nach einem oder mehreren der Ansprüche 1-3,
- **dadurch gekennzeichnet, dass**
- die Sensoreinrichtung (14)/ die Sensoreinheit/ en (16) an der Treppeneinrichtung (11) und/ oder dem Geländer (13) und/ oder an einer oder mehreren Treppenstufen (12) nachrüstbar ausgebildet ist.

6. Treppensystemvorrichtung nach einem oder mehreren der vorstehenden Ansprüche
- **dadurch gekennzeichnet, dass**
- das elektronische Gerät (20) als Smartphone oder Tablet oder Computer ausgebildet ist mit einer Sende- und Empfangseinheit (22), einer Auswerteinheit (24), einer Speichereinheit (26) und/ oder einer Anzeigeeinheit (28).

7. Treppensystemvorrichtung nach einem oder mehreren der vorstehenden Ansprüche
- **dadurch gekennzeichnet, dass**
- die Sensoreinheit (16) als Bewegungs-, Beschleunigungs-, Druck- oder Vibrationssensoreinheit zur Erfassung der Begehung der Treppeneinrichtung (11) durch eine Person.

8. Treppensystemvorrichtung nach Anspruch 7
- **dadurch gekennzeichnet, dass**
- die Sensoreinheit (16) an der untersten und/ oder obersten Treppenstufe (12) oder an jeder Treppenstufe (12) angeordnet ist.

9. Treppensystemvorrichtung nach Anspruch 8,
- **dadurch gekennzeichnet, dass**
- die Auswerteinheit (24) so ausgebildet ist, dass sie in Abhängigkeit der Signale der Sensoreinrichtung (14) die Anzahl der Treppenbegehungen und/ oder den Zeitpunkt der Treppenbegehungen ermittelt und abrufbar in der Speichereinheit (26) zur weiteren Auswertung abspeichert.

10. Treppensystemvorrichtung nach Anspruch 8,
- **dadurch gekennzeichnet, dass**
- eine Lichtsensoreinheit zum Erfassen der aktuellen Helligkeit/ Dunkelheit vorhanden ist,
- die an jeder Treppenstufe (12) vorhandene Sensoreinheit so ausgebildet ist, dass bei Begehung einer Treppenstufe (12) und bei Unterschreiten eines vorgegebenen Lichtwerts entsprechende Signale an eine Steuereinrichtung einer Lichtanlage mit Lichteinheiten an jeder Treppenstufe (12) abgibt, die daraufhin eine vorgegebene Anzahl von Lichteinheiten, die ober- und/ oder unterhalb der betretenden Stufe angeordnet sind, über einen vorgegebenen Zeitraum aktiviert und/ oder einen vorgegebenen Beleuchtungswert/ Beleuchtungsfarbe der Lichteinheiten aktiviert.

11. Treppensystemvorrichtung nach Anspruch 8,
- **dadurch gekennzeichnet, dass**
- die Auswerteinheit (24) so ausgebildet ist, dass sie bei Feststellung erhöhter Beschleunigungs- oder Vibrationswerte eine Alarmanlage angesteuert wird und/ oder eine Information in der Anzeigeeinheit (28) angezeigt wird und/ oder eine elektronische Mitteilung an dritte elektronische Geräte versandt wird.

12. Treppensystemvorrichtung nach Anspruch 8,
- **dadurch gekennzeichnet, dass**
- die Auswerteinheit (24) so ausgebildet ist, dass bei Feststellung der Überschreitung eines vorgegebenen Zeitintervalls ohne Bewegungssignale eine Alarmanlage angesteuert und/ oder eine Information in der Anzeigeeinheit (28) angezeigt wird und/ oder eine elektronische Mitteilung an dritte elektronische Geräte versandt wird.

13. Treppensystemvorrichtung nach einem oder mehreren der vorstehenden Ansprüche,
- **dadurch gekennzeichnet, dass**
- die Sensoreinrichtung (14) so ausgebildet ist, dass sie Klimadaten des Raumklimas in den die Treppeneinrichtung angeordnet ist, wie Temperatur, Luftfeuchtigkeit oder dergleichen detektiert und an eine Steuerungseinrichtung einer Heizungs- / Klimaanlage zur funktionsgerechten Steuerung des Raumklimas übermittelt.

14. Treppensystemvorrichtung nach einem oder mehreren der vorstehenden Ansprüche,
- **dadurch gekennzeichnet, dass**
- die Sensoreinrichtung (14) Rauch- und/ oder Gassensoreinheiten aufweist, und die Auswerteinheit (24) so ausgebildet ist, dass sie bei Überschreiten vorgegebener Grenzwerte eine Alarmanlage ansteuert und/ oder eine Information in der Anzeigeeinheit (28) angezeigt wird und/ oder eine elektronische Mitteilung an dritte elektronische Geräte versendet.

15. Treppensystemvorrichtung nach einem oder mehreren der vorstehenden Ansprüche,
- **dadurch gekennzeichnet, dass**
- die Sensoreinrichtung (14) so ausgebildet ist, dass die Energieversorgung durch ein Stromnetz, Akkus, Solarzellen, Induktionsaufladung oder durch die Signale der Sende- und Empfangseinheit (22) des elektronischen Geräts (20) möglich ist.
